# EUROPÄISCHE PATENTSCHRIFT

(11) **EP 1 703 618 B1**
(45) Veröffentlichungstag und Bekanntmachung des Hinweises auf die Patenterteilung: **15.05.2013**
(21) Anmeldenummer: 05005475.8
(22) Anmeldetag: 14.03.2005
(51) Int. Cl.: H02K 9/06, F04D 29/08

(54) **Luftgekühlter Elektromotor**
Air-cooled electric motor
Moteur électrique à refroidissement par air

(43) Veröffentlichungstag der Anmeldung: 20.09.2006
(73) Patentinhaber: Kaeser Kompressoren AG, 96450 Coburg (DE)
(72) Erfinder: Rexhäuser, Stefan, 98553 Hinternah (DE); Foerster, Dr. Andreas, 96487 Dörfles-Esbach (DE)
(74) Vertreter: Zech, Stefan Markus

(56) Entgegenhaltungen:
- EP-A- 1 367 697
- DE-A1- 3 624 386
- DE-C- 616 524
- DE-C- 850 317
- GB-A- 634 186
- US-A- 2 073 833
- US-A- 5 903 060
- PATENT ABSTRACTS OF JAPAN Bd. 1999, Nr. 04, 30. April 1999 (1999-04-30) -& JP 11 013674 A (HITACHI LTD), 19. Januar 1999 (1999-01-19)

## Beschreibung

Die Erfindung betrifft eine Kompressoranlage umfassend eine Motoreinheit mit einem Motorgehäuse, aus dem eine Antriebswelle herausragt, wobei durch die Antriebswelle ein Lüfter angetrieben wird.

Elektromotoren, z.B. Drehstrom-Asynchronmotoren, werden häufig mit sogenannter Eigenbelüftung ausgeführt. Dabei ist auf der Antriebswelle ein Lüfter angebracht, der den Motor mit Kühlluft versorgt. Dieser Lüfter ist meist als Radiallüfter, in seltenen Fällen auch als Axiallüfter ausgeführt, der auf einem Ende der Antriebswelle, der sogenannten B-Seite des Elektromotors montiert ist und unter einer feststehenden, am Motorgehäuse befestigten Lüfterhaube rotiert. Die Lüfterhaube leitet den Kühlluftstrom im Sinne einer möglichst guten Kühlluftwirkung in die axialen Kühlrippen des Motorgehäuses, so dass das Motorgehäuse von außen gekühlt wird.

In vielen Anwendungsfällen müssen Elektromotoren sowohl Maschinenaggregate als auch zusätzliche Anlagenlüfter antreiben, mit denen z.B. Kühlluft für die mit dem Elektromotor angetriebenen Maschinenaggregate gefördert wird.

Aus der JP 11013674 ist ein in eine Kompressoranlage integrierter geschlossen ausgebildeter Elektromotor bekannt, dessen Außenseite durch von Außen angesaugte Luft gekühlt wird. Die Kühlung diese Elektromotors ist allerdings wenig effizient.

Die GB 634 186 zeigt einen Elektromotor mit einer Antriebswelle, wobei durch die Antriebswelle ein Lüfter angetrieben wird. Dieser Lüfter weist getrennte Lüfterabschnitte zur Förderung voneinander getrennter Luftströme auf.

Die Aufgabe der vorliegenden Erfindung besteht darin, einen Aufbau anzugeben, bei dem zur Kühlung sowohl des Elektromotors selbst als auch möglicher weiterer Maschinenaggregate zwei Luftströme in besonders einfacher und zuverlässiger Weise erzeugt werden und bei der eine eingangsseitige Durchmischung von Luftströmen verhindert wird.

Diese Aufgabe wird mit einer Kompressoranlage umfassend einen luftgekühlten Elektromotor nach den Merkmalen des Anspruches 1 gelöst. Vorteilhafte Weiterbildungen sind in den Unteransprüchen angegeben.

Ein erster Kerngedanke der vorliegenden Erfindung besteht darin eine Kompressoranlage zur Bereitstellung eines komprimierten Gasfluids aufzuzeigen, umfassend einen Wärmetauscher zur direkten oder indirekten Kühlung des Gasfluids, einen luftgekühlten Elektromotor, welcher eine Motoreinheit mit einem Motorgehäuse, aus dem eine Antriebswelle hinausragt, umfasst, wobei durch die Antriebswelle ein Lüfter angetrieben wird, wobei der Lüfter mindestens radial und/oder axial getrennte Lüfterabschnitte zur Förderung eines ersten Luftstroms sowie mindestens eines weiteren, vom ersten Luftstrom getrennten zweiten Luftstroms umfasst, ferner umfassend eine zustromseitige Kanaltrennung, die einen ersten Einlasskanal für den ersten Luftstrom von einem zweiten Einlasskanal für den zweiten Luftstrom trennt, wobei der erste Luftstrom von dem ersten Lüfterabschnitt angesaugt und der zweite Luftstrom mittels des zweiten Lüfterabschnitts gefördert wird, wobei die Luftströme über räumlich getrennte Querschnitte in die jeweils zugeordneten Lüfterabschnitte eintreten und aus diesen auch ohne Vermischung bzw. ohne wesentliche Vermischung wieder austreten und wobei der zweite Luftstrom und ggf. weitere Luftströme über den Wärmetauscher geführt und der Wärmetauscher (25) bezogen auf den zweiten Luftstrom (18) stromauf des Lüfters (14) angeordnet ist, und schließlich umfassend einen Kompressor, der durch die Motoreinheit des Elektromotors angetrieben wird.

Eine weitere Überlegung der vorliegenden Erfindung besteht darin, dass der erfindungsgemäß vorgesehene auf der Antriebswelle angeordnete Lüfter mindestens zwei radial und/oder axial getrennte Lüfterabschnitte zur Förderung eines ersten Luftstromes sowie mindestens eines weiteren vom ersten Luftstrom getrennten zweiten Luftstroms umfasst, wobei die Luftströme mindestens auf der Zustromseite des Lüfters vorzugsweise auch auf der Abstromseite des Lüfters getrennt geführt sind. Mindestens auf der Zustromseite, vorzugsweise auch auf der Abstromseite des Lüfters gibt es damit jeweils getrennte Zu- und Abströmquerschnitte für die mindestens zwei getrennten Luftströme. Die Trennung der Zuströmquerschnitte bzw. der Abströmquerschnitte erfolgt vorzugsweise durch eine radiale Trennung.

Als getrennte Führung wird hier eine Anordnung verstanden, die die beiden Luftströme zumindest in Abschnitten unmittelbar vor dem Eintritt in den Lüfter bzw. unmittelbar nach dem Austritt aus dem Lüfter zumindest im Wesentlichen getrennt hält. Bevorzugtermaßen soll der Strömungsweg für eine getrennte Führung vor bzw. nach dem Lüfter mindestens der Abmessung des Lüfters in axialer Richtung entsprechen, vorzugsweise ein Mehrfaches dieser Größe betragen. Durch den erfindungsgemäßen Aufbau wird es möglich, an einem Elektromotor mit einem einzigen Lüfter zwei Luftströme, insbesondere zu Kühlzwecken, zu erzeugen, die sowohl zustrom- als auch abstromseitig getrennt geführt werden. Insofern ist es möglich, zustromseitig beispielsweise Luftströme unterschiedlicher Temperaturen, unterschiedlicher Freiheit von Verschmutzungen, unterschiedlichen Feuchtegehalts, etc. zuzuführen bzw. diese zugeführten Luftströme über unterschiedliche zu kühlende Aggregate zu führen. Gleichzeitig ist eine derartige Aufteilung auch abstromseitig gegeben, so dass auch hier unterschiedliche Kühlzwecke erfüllt werden können.

Die Integration in einen einzigen Lüfter bewirkt gleichzeitig eine äußerst kompakte Bauform sowie eine Reduzierung bewegter Teile. Vorzugsweise wird dabei die Motoreinheit stromabwärts des Lüfters angeordnet.

In einer zweckmäßigen Weiterbildung ist die Anordnung so getroffen, dass die Luftströme nach Verlassen des Lüfters abstromseitig im Wesentlichen parallel geführt sind.

In einer besonders bevorzugten Ausgestaltung sind die Luftströme abstromseitig des Lüfters parallel zur Antriebswelle geführt.

In einer weiteren, konkret bevorzugten Ausführungsform wird der erste Luftstrom so geführt, dass er an der Außenseite des Motorgehäuses vorbeistreicht und die Motoreinheit damit ggf. über entsprechende Kühlrippen von außen kühlt.

Die Kühlung des Elektromotors ist um so wirkungsvoller, je kälter der erste Luftstrom dem Lüfter zugeführt wird. Optimale Verhältnisse ergeben sich dann, wenn der erste Luftstrom dem Lüfter mit der tiefsten Umgebungstemperatur, möglichst ohne Vorwärmung zugeführt wird. Konkret bedeutet dies, dass der zur Kühlung des Elektromotors vorgesehene Luftstrom so geführt wird, dass er zumindest stromauf des Elektromotors keine weiteren Anlagenkomponenten zu kühlen hat.

In einer konkret bevorzugten Ausgestaltung ist der innere Lüfterabschnitt als Radiallüfter ausgebildet.

In einer weiteren, konkreten Ausgestaltung ist der äußere Lüfterabschnitt als Axiallüfter ausgebildet.

Nach einem weiteren bevorzugten Aspekt der vorliegenden Erfindung umfasst der Lüfter eine vorzugsweise rotationssymmetrisch ausgebildete Trennfläche, die insbesondere als Rotationsfläche ausgebildet ist, und eine Trennung der Luftströme bewirkt. Somit werden die Luftströme auch innerhalb des Lüfters getrennt gehalten. Selbstverständlich wird eine möglichst vollständige Trennung angestrebt; auch eine im Wesentlichen getrennte Führung der beiden Luftströme innerhalb des Lüfters wird jedenfalls im Sinne der Erfindung als ausreichend angesehen.

Um auch zustromseitig des Lüfters die Luftströme möglichst gut getrennt halten zu können, ist am Elektromotor bzw. innerhalb einer Kompressoranlage, in der der erfindungsgemäße Elektromotor eingebaut ist, eine zustromseitige Kanaltrennung beispielsweise in Form eines insbesondere zylindrischen Rohrstückes ausgebildet, wobei der erste Luftstrom durch das Innere des Rohrs angesaugt wird. Der zweite Luftstrom wird dementsprechend in Bereichen außerhalb des Rohrstückes (oder in einer eigenen Führung) angesaugt.

Abstromseitig kann ebenfalls eine Kanaltrennung beispielsweise in Form eines Zylindermantels bzw. im Wesentlichen in Form eines Zylindermantels, ausgebildet sein, der insbesondere das Motorgehäuse zumindest teilweise umschließt und vorzugsweise feststehend, d.h. nicht mitrotierend oder alternativ mit dem Lüfter mitrotierend ausgebildet ist.

In einer weiter bevorzugten Ausgestaltung ist die Trennfläche innerhalb des Lüfters auf die entsprechenden Radien der zustromseitigen Kanaltrennung und/oder der abstromseitigen Kanaltrennung abgestimmt, so dass die Luftströme mit ausreichender Abtrennung voneinander getrennt geführt sind. Die Gestaltung der Kanaltrennungen auf der Zustrom- bzw. der Abstromseite ermöglicht es, dass die getrennt zu fördernden Luftströme mit ausreichender gegenseitiger Abdichtung durch geometrisch und baulich einfache Kanäle zugeführt werden können z.B. unter Verwendung kreisförmiger Rohrquerschnitte mit oder ohne axiale Überlappung und/oder übliche berührungslose Abdichtungen (Spalt, Labyrinth, etc.) evtl. auch durch berührende Dichtungen (Schaumstoffzuschnitte o.ä.).

In einer weiteren möglichen Ausgestaltung kann der Lüfter an seinem Außenumfang mit einem rotationssymmetrischen, insbesondere feststehenden, Tubus zusammenwirken, der die Wirbelbildung verringert. Gerade wenn der äußere Lüfterabschnitt als Axiallüfter ausgebildet ist, können sich an den Blattspitzen des Axiallüfters Wirbel bilden, die durch Verwendung eines derartigen Tubus verringert werden. Hierdurch kann der Wirkungsgrad verbessert und die Geräuschemission reduziert werden. Der Tubus kann fest am Umfang des Lüfters angebracht sein und mit diesem rotieren, er kann fest in der Anlage angebracht sein und der Lüfter rotiert darin oder es kann eine Kombination aus beiden Lösungen realisiert werden.

Die vorliegende Erfindung ermöglicht eine Anbringung des erfindungsgemäßen Lüfters auf der Seite der Antriebswelle des Motorgehäuses, an der gleichzeitig ein Getriebe bzw. eine Arbeitsmaschine angeschlossen ist (A-Seite des Motors), wobei hierzu insbesondere das Wellenende durch den Lüfter hindurch verlängert werden könnte. Bevorzugt wird allerdings eine Ausgestaltung, in der der erfindungsgemäße Lüfter auf einer gegenüberliegenden Seite des Motorgehäuses angeordnet ist (B-Seite des Motors), so dass eine etwaige Getriebeeinheit, ein Anschluss an eine Arbeitsmaschine, etc. auf der anderen Seite (A-Seite) nicht behindert ist.

In einer weiter bevorzugten Ausgestaltung umfasst der innere Lüfterabschnitt eine Konusfläche bzw. einen Konus, wobei der erste Luftstrom zwischen der Konusfläche und der Trennfläche geführt ist. Dabei dient die Konusfläche bzw. der Konus als innere Deckscheibe des Radiallüfters und soll eine möglichst verlustfreie, strömungsgünstige Führung des ersten Luftstromes vorzugsweise auch an einer Stirnseite der Motoreinheit bewirken.

Die Trennfläche zur Trennung des ersten Luftstroms vom zweiten Luftstrom innerhalb des Lüfters ist dagegen vorzugsweise so gestaltet, dass sie zumindest teilweise auch als "Lüfterhaube des Motors" dient, wobei der hierin wirksame Luftstrom durch den inneren Lüfterabschnitt, der als Radiallüfter ausgebildet ist, erzeugt wird. Die als "Lüfterhaube" dienende Trennfläche kann gleichzeitig so geformt sein, dass der vom inneren Lüfteranschnitt geförderte Luftstrom abstromseitig in eine im Wesentlichen zur Antriebswelle parallele Richtung gelenkt wird.

Die abstromseitige Kanaltrennung bzw. das abstromseitige Kanaltrennelement kann evtl. als Verlängerung der Trennfläche mit dem Lüfter mitrotieren; bevorzugt ist es allerdings mit geringem Spalt bzw. ausreichender Abdichtung feststehend ausgebildet und weist eine Länge von vorzugsweise mindestens 40 % der Länge der Motoreinheit auf. Die abstromseitige Kanaltrennung bzw. das abstromseitige Kanaltrennelement ist dabei so gestaltet, dass es die Vermischung des durch den inneren Lüfterabschnitt geförderten Luftstroms mit dem durch den äußeren Lüfterabschnitt geförderten Luftstroms zumindest im Wesentlichen unterbindet.

Nach einem weiteren Aspekt der vorliegenden Erfindung ist der Lüfter unter Zwischenschaltung eines Drehschwingungsdämpfers an die Antriebswelle des Elektromotors angeschlossen. Dieser Anschluss kann insbesondere form- oder kraftschlüssig erfolgen. In einer konkreten Ausgestaltung kann eine Gummi-Hülse vorgesehen sein, über die der Lüfter auf der Antriebswelle angeschlossen ist. Der Lüfter ist nämlich insbesondere bei Anlaufvorgängen der Kompressoranlage aus dem Stillstand heraus - bei Stern-Dreieck-Anlauf insbesondere zum Umschaltzeitpunkt von Stern auf Dreieck - häufigen Drehmomentstößen ausgesetzt. Im ungünstigen Fall können derartige Drehmomentstöße zu Dauerbrüchen des Lüfters führen. Ein Drehschwingungsdämpfer kann derartige Drehmomentstöße dämpfen.

Nach einem weiteren Aspekt der vorliegenden Erfindung ist der Lüfter als Kunststoff-Spritzgussteil oder als Aluminium-Druckgussteil oder als Aluminium-Kokillengussteil ausgebildet. Bei entsprechender hinterschneidungsfreier Gestaltung des Lüfters ist es sogar möglich, die Spritzguss-Druckguss oder Kokillenguss-Form ohne Schieber, d. h. nur bestehend aus den beiden Formhälften, auszuführen. Selbstverständlich können für den Lüfter aber auch andere geeignete Materialien in Betracht gezogen werden.

Unter "indirekter Kühlung des Gasfluids" ist auch die Kühlung des Öls in einem öleingespritzten Kompressor zu verstehen. Es gibt durchaus öleingespritzte Schraubenkompressoren kleiner Leistung, die ohne Nachkühler für die erzeugte Druckluft auskommen und nur einen Kühler im Ölkreislauf besitzen. Generell führt der Ölkühler bei öleingespritzten Schraubenkompressoren im Vergleich zum Druckluftnachkühler - falls vorhanden - die größere Wärmemenge ab, weshalb er generell größer dimensioniert ist.

Nach einem besonderen Aspekt können dabei Motoreinheit, Lüfter und Wärmetauscher so zueinander angeordnet sein, dass der Wärmetauscher bezogen auf den zugeordneten Luftstrom stromauf des Lüfters vorgesehen wird. Vorzugsweise ist weiterhin der Lüfter bezogen auf den zugeordneten Luftstrom auch stromauf der Motoreinheit vorgesehen.

Die erfindungsgemäße Kompressoranlage kann in der vorstehend beschriebenen, bevorzugten Ausgestaltung relativ kompakt bauend ausgebildet werden, d.h. die Erstreckung in Richtung der Antriebswelle der Motoreinheit kann vergleichsweise kurz bemessen werden. Die A-Seite der Motoreinheit bleibt für den Antrieb von Anlagenkomponenten frei. Bei einem Riemenantrieb können sowohl Riemen als auch Riemenscheibe leicht ausgewechselt werden. Weiterhin kann die Motoreinheit mit frischer, d.h. nicht von anderen Anlagenkomponenten bereits erwärmter Umgebungsluft gekühlt werden. Auch der Wärmetauscher wird bei einer bevorzugten Anordnung durch einen separaten Luftstrom mit nicht vorgewärmter Umgebungsluft gekühlt.

In einer besonders bevorzugten Ausgestaltung ist dabei der Wärmetauscher in einer äußeren Gehäuseverkleidung integriert derart, dass der Wärmetauscher an einer Zustromseite des zugeordneten Luftstromes von außen sichtbar bleibt. Auf diese Weise wird einerseits dem Wärmetauscher möglichst kalte Umgebungsluft zugeführt; auf der anderen Seite kann eine Verschmutzung des Wärmetauschers auch von außen schnell erkannt werden, so dass entsprechende Maßnahmen ergriffen werden können.

In einer weiter bevorzugten Ausgestaltung sind bei der erfindungsgemäßen Kompressoranlage Kanäle, insbesondere mindestens ein erster Einlasskanal, vorzugsweise ein zweiter oder mindestens ein weiterer Einlasskanal sowie ein Auslasskanal vorgesehen, um das Gasfluid in die mit einer schallisolierenden Gehäuseverkleidung umgebene Kompressoranlage einzuführen bzw. auszuführen, wobei die Kanäle mit Schalldämpfungsmitteln, insbesondere mit wandseitigen Schalldämpfungsbelägen ausgestattet sind, um eine Schallemission aus der Kompressoranlage heraus zu dämpfen. Einlasskanal, bzw.

Einlasskanäle und Auslasskanal, bzw. Auslasskanäle können dabei so gestaltet sein, dass sie eine im Wesentlichen durchgehende Kanalführung des Gasfluids innerhalb der Kompressoranlage bewirken. Beispielsweise können der oder die Einlasskanäle von der Gehäuseverkleidung bis an den Lüfter heranreichen. Bevorzugt wird allerdings, dass der Auslasskanal sich nicht über den kompletten Strömungsweg vom Elektromotor bis zu einer Gehäuseöffnung erstreckt, sondern dass vielmehr zumindest eine bereichsweise freie Strömung des Gasfluids zugelassen wird, um weitere Komponenten der Kompressoranlage, wie beispielsweise das Verdichterelement selbst, zusätzlich zu umströmen.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen:
- Fig. 1: eine schematische Schnittansicht zur Erläuterung einer Ausführungsform einer Kompressoranlage mit dem erfindungsgemäßen luftgekühlten Elektromotor
- Fig. 2: eine Schnittansicht des Lüfters entlang der Linie II-II in Fig. 3
- Fig. 3: eine Ausführungsform des erfindungsgemäßen Lüfters in einer Draufsicht
- Fig. 4: eine perspektivische Ansicht des Lüfters nach Fig. 2
- Fig. 5: eine perspektivische Schnittansicht des Lüfters nach Fig. 2
- Fig. 6: eine perspektivische Schnittansicht des Lüfters nach Fig. 2, der über einen Drehschwingungsdämpfer mit einer Antriebswelle des Elektromotors verbunden ist

- Fig. 7: eine erste Ausführungsform einer Kompressoranlage nach dem Stand der Technik

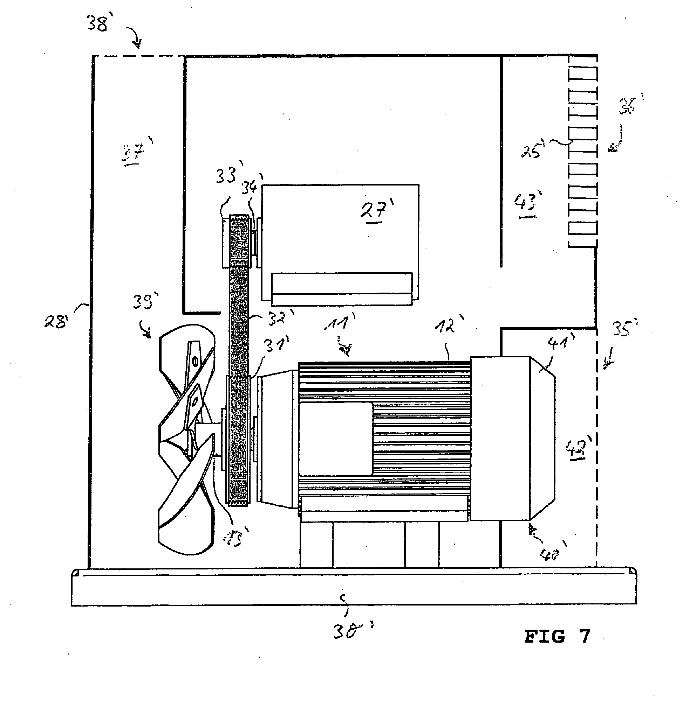

In Fig. 7 ist eine erste Ausführungsform einer Kompressoranlage nach dem Stand der Technik in einer schematischen Teilschnittansicht dargestellt. Innerhalb einer Gehäuseverkleidung 28' ist auf einem Grundrahmen 30' eine Motoreinheit 11' montiert, die ein zu kühlendes Motorgehäuse 12' aufweist. Die Motoreinheit 11' umfasst weiterhin eine Antriebswelle 13', auf der eine Riemenscheibe 31' drehfest angeordnet ist, um über einen Riemen 32' ein Verdichterelement 27' ebenfalls über eine eine mit Riemenscheibe 33' versehene Welle 34' anzutreiben. Auf der der Riemenscheibe 31' gegenüberliegenden Seite der Motoreinheit 11' ist eine Motorlüftereinheit stirnseitig auf die Motoreinheit 11' aufgesetzt, wobei die Motorlüftereinheit 40' eine Motorlüfterhaube 41' und einen darunter angeordneten, auf der Antriebswelle 13' sitzenden Motorlüfter (nicht gezeigt) umfasst.

Auf der gegenüberliegenden Seite der Antriebswelle 13', also auf der Seite der Riemenscheibe 31' (A-Seite der Motoreinheit), ist weiterhin ein Anlagenlüfter 39' angeordnet. Die Motorlüftereinheit 40' unter der Motorlüfterhaube 41' kann kalte Umgebungsluft durch eine erste Gehäuseöffnung 35' und einen sich daran anschließenden ersten Einlasskanal 42' ansaugen und dem zu kühlenden Motorgehäuse 12' zuführen. Der Anlagenlüfter 39' fördert durch einen Auslasskanal 37' einen Luftstrom aus dem Inneren der Kompressoranlage heraus, der sich aus dem Luftstrom zur Motorkühlung und einem Luftstrom zur Anlagenkühlung zusammensetzt, der über eine zweite Gehäuseöffnung 36' in der Gehäuseverkleidung eintritt, dort über einen in der zweiten Gehäuseöffnung 36' integrierten Wärmetauscher 25' geführt wird und über einen zweiten Einlasskanal 43' in das Innere der Kompressoranlage geleitet wird. Die beiden Luftströme werden dann zusammen über den Auslasskanal 37' geführt und an einer dritten Gehäuseöffnung 38' ausgestoßen.

Die Dimensionierung der Querschnitte des ersten Einlasskanals 42', des zweiten Einlasskanals 43' sowie des Auslasskanals 37' sowie die Dimensionierung des Anlagenlüfters 39' sowie der Motorlüftereinheit 40' stellt sicher, dass einerseits der erforderliche Kühlluftstrom über den Wärmetauscher 25' strömt und andererseits die Motoreinheit mit separater, kühler Umgebungsluft von außen gekühlt wird. Diese Führung von Motor- und Anlagenkühlluft erfordert eine - bis auf die Öffnungen der genannten Kanäle - im Wesentlichen geschlossene Gehäuseverkleidung 28' der Kompressoranlage.

Wenn das Verdichterelement an die Motoreinheit angeflanscht wird, wie es z.B. bei Direktantrieb über eine Kupplung oder bei Getriebeantrieb üblich ist, steht kein freies Ende der Antriebswelle 13' auf der A-Seite der Motoreinheit zur Installation des Anlagenlüfters 39' zur Verfügung. In diesem Fall kann z.B. die Welle 34' des Verdichterelements 27' auf der der Motoreinheit 11' abgewandten Seite des Verdichterelements 27' aus diesem herausgeführt und zur Installation des Anlagenlüfters 39' verwendet werden. Diese Lösung ist jedoch aufwendig, weil hierfür eine druckfeste und dichte Wellendurchführung durch das Verdichterelement (z.B. Wellendichtring, Gleitringdichtung) erforderlich ist.

Bei der in Figur 7 dargestellten Lösung strömt die Anlagenkühlluft ohne Vorwärmung, d.h. auf dem Temperaturniveau der Umgebung in den Wärmetauscher 25'. Eine Verschmutzung des Wärmetauschers 25' findet erfahrungsgemäß vorwiegend auf der Einströmseite der Anlagenkühlluft in den Wärmetauscher 25' statt. Der Umstand, dass der in einer Außenfläche der Gehäuseverkleidung 28' installierte Wärmetauscher 25' in Bezug auf das Anlageninnere von "außen nach innen" von der Anlagenkühlluft durchströmt wird, erleichtert deshalb das Erkennen von Kühlluftverschmutzungen und erhöht die Wahrscheinlichkeit, dass diese beseitigt werden, bevor eine Verschlechterung der Anlagenkühlung bedingt durch Verschmutzungen am Wärmetauscher 25' zu Einschränkungen des Kompressorbetriebs führen. Die Motorlüftereinheit 40' saugt über den ersten Einlasskanal 42', wie bereits erwähnt, Kühlluft auf dem Temperaturniveau der Umgebung an.

Ein Nachteil dieser vorbekannten Lösung besteht darin, dass der Anlagenlüfter 39' zusätzlich zur Anlagenkühlluft auch die Motorkühlluft als Luftstrom aus dem Inneren der Kompressoranlage in die Umgebung herausfördern muss. Ein dafür ausgelegter Anlagenlüfter 39' hat z.B. einen größeren Durchmesser und damit den Nachteil einer größeren Geräuschemission.

Aus Geräuschgründen wird die Kühlluftführung von Schraubenkompressoren häufig so ausgeführt, dass erster Einlasskanal 42', zweiter Einlasskanal 43' sowie Auslasskanal 37' möglichst lang und schmal ausgeführt und mit schallabsorbierenden Materialien ausgekleidet werden, um Geräuschemissionen aus dem Inneren der Kompressoranlage in die Umgebung zu reduzieren. Die aus akustischen Gründen gewünschte lange und schmale Ausführung der vorgenannten Kanäle steht im Widerspruch zu der ebenfalls gewünschten kompakten Bauform und wird weiterhin eingeschränkt durch die aufgrund der Fördercharakteristik der Lüfter begrenzten zulässigen Differenzdrücke der Luftströme in den vorgenannten Kanälen.

Ein weiterer Nachteil besteht bei der gezeigten Ausführungsform nach Figur 7 darin, dass der vom Anlagenlüfter geförderte Kühlluftstrom, um die axiale Baulänge der Kompressoranlage zu begrenzen und trotzdem einen ausreichend langen und wirksamen Auslasskanal 37' zu erreichen, der Luftstrom z.B. nach oben umgelenkt werden muss. Auf der Abströmseite des Anlagenlüfters 39' hat die geförderte Luft bereits einen relativ hohen Impuls, so dass die Abströmung mit einer hohen Richtwirkung erfolgt. Dies erschwert die Umlenkung, weil zur Vermeidung nachteiliger hoher Druckverluste relativ große Kanalquerschnitte und Abstände zwischen Anlagenlüfter 39' und Umlenkung des Auslasskanals 37' bzw. Gehäuseverkleidung 28' erforderlich sind.

Eine Umlenkung könnte auch durch Verwendung eines Radiallüfters als Anlagenlüfter 39' realisiert werden, dessen Abströmung bereits im Wesentlichen in radialer und in Umfangsrichtung erfolgt. Radiallüfter sind jedoch aufgrund des höheren Bauaufwandes teurer als Axiallüfter. Außerdem würde die Verwendung eines Radiallüfters den Wechsel des Riemens 32' erschweren, der bei Verwendung eines Axiallüfters problemlos über diesen "heruntergefädelt" werden kann.

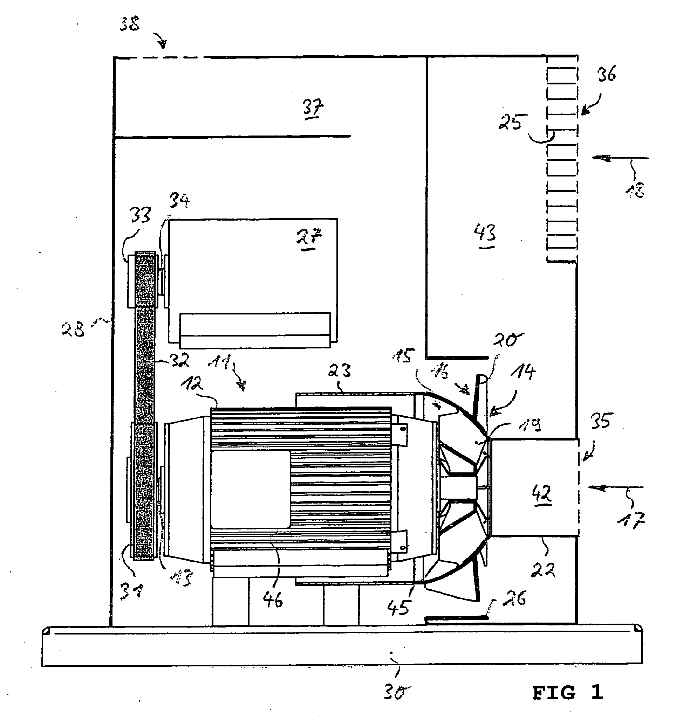

In Figur 1 ist eine schematische Schnittansicht zur Erläuterung einer Ausführungsform einer erfindungsgemäßen Kompressoranlage bzw. einer Kompressoranlage mit einem erfindungsgemäß luftgekühlten Elektromotor dargestellt. Die hier dargestellte, erfindungsgemäß aufgebaute Kompressoranlage umfasst zunächst eine auf einem Grundrahmen 30 montierte Motoreinheit 11, wobei die Motoreinheit 11 ein zu kühlendes Motorgehäuse 12 aufweist. Die Motoreinheit 11 umfasst weiterhin eine sich durch die Motoreinheit 11 erstreckende und an beiden Seiten aus der Motoreinheit 11 austretende Antriebswelle 13. Hierbei ist auf der Antriebswelle 13 auf einer ersten Seite des Motorgehäuses 12 (A-Seite) eine motorseitige Riemenscheibe 31 drehfest angeflanscht. Mittels der Riemenscheibe 31 sowie einem Riemen 32 wird eine mit einer Welle 34 eines Verdichterelements 27 drehfest verbundene abtriebsseitige Riemenscheibe 33 angetrieben.

Auf der gegenüberliegenden Seite des Motorgehäuses 12 ist auf der Antriebswelle 13 ein erfindungsgemäß ausgebildeter Lüfter 14 angeordnet, der zwei Lüfterabschnitte, nämlich einen inneren Lüfterabschnitt 15 sowie einen äußeren Lüfterabschnitt 16 umfasst. Erfindungsgemäß ist zunächst vorgesehen, dass der Lüfter 14 mindestens einen ersten Luftstrom 17, hier einen Motorkühlluftstrom, sowie einen zweiten Luftstrom 18, der hier als Anlagenkühlluftstrom geführt ist, antreibt. Eine zustromseitige Kanaltrennung 22 trennt einen ersten Einlasskanal 42 für den ersten Luftstrom 17 von einem zweiten Einlasskanal 43 für den zweiten Luftstrom 18. Über eine erste Gehäuseöffnung 35 wird Motorkühlluft vom inneren Lüfterabschnitt 15 des Lüfters 14, der einen Radiallüfter 19 ausbildet, über den ersten Einlasskanal 42 angesaugt und durch den inneren Lüfterabschnitt 15 am Motorgehäuse 12, insbesondere auch über eine Stirnseite 45 des Motors an Kühlrippen 46 der Motoreinheit entlang, nach Austritt aus dem inneren Lüfterabschnitt 15 im Wesentlichen parallel zur Antriebswelle 13 der Motoreinheit 11 geführt.

Um die Führung entlang des Motorgehäuses 12 noch zu verbessern, ist eine abstromseitige Kanaltrennung 23 in Form eines Tubus vorteilhaft, welcher feststehend (nicht mit dem Lüfter 14 mitrotierend) das Motorgehäuse 12 zumindest über einen gewissen Teil seiner Länge, vorzugsweise über mindestens 40 % der Länge des Motorgrundkörpers, umgreift. Dabei ist die abstromseitige Kanaltrennung 23 so gestaltet, dass sie die Vermischung des Motorkühlluftstromes mit einer Außenumgebung der abstromseitigen Kanaltrennung 23 zumindest im Wesentlichen verhindert.

Erfindungsgemäß wird durch den Lüfter 14 - wie bereits erwähnt - mindestens auch ein zweiter Luftstrom 18 gefördert, nämlich über einen äußeren Lüfterabschnitt 16. Dieser zweite Luftstrom 18 tritt über einen in einer zweiten Gehäuseöffnung 36 installierten Wärmetauscher 25 in das Innere der Kompressoranlage ein, wodurch eine Kühlung des Wärmetauschers 25 erfolgt und dabei gleichzeitig die Ansaugseite des Wärmetauschers 25 von außen sichtbar, mindestens jedoch von außen gut zugänglich bleibt. Über einen zweiten Einlasskanal 43 gelangt dieser zweite Luftstrom, der hier als Anlagenkühlluft dient, schließlich an den Lüfter 14. Der hier konkret als Axiallüfter ausgebildete äußere Lüfterabschnitt 16 fördert den Luftstrom ebenfalls im in wesentlichen zur Antriebswelle 13 der Motoreinheit 11 paralleler Richtung, so dass sowohl erster Luftstrom 17 als auch zweiter Luftstrom 18 sowohl beim Eintritt in als auch beim Austritt aus dem Lüfter im Wesentlichen gleichgerichtet sind. Ein feststehender rotationssymmetrischer Tubus 26 ist so angeordnet, dass er den äußeren Lüfterabschnitt 16, der einen Axiallüfter 20 ausbildet, umschließt.

Der sich an den Wärmetauscher 25 anschließende zweite Einlasskanal 43 für den zweiten Luftstrom 18 (Anlagenkühlluftstrom) ist bei der vorliegenden Ausführungsform im Wesentlichen orthogonal zur Antriebswelle 13 der Motoreinheit 11 ausgerichtet, was eine kompakte Bauform begünstigt. Vorteilhaft ist bei der vorliegenden Ausführungsform weiterhin, dass die für den zweiten Luftstrom 18 notwendige Umlenkung vor dem Lüfter 14 auch mit relativ geringem Abstand zur Gehäuseverkleidung 28 erfolgen kann bzw. generell in axialer Richtung relativ wenig Raum an der Ansaugseite des äußeren Lüfterabschnitts 16 benötigt wird. Der zweite Luftstrom 18 wird abstromseitig des Lüfters 14 durch das Innere der Kompressoranlage, wo er sich mit dem ersten Luftstrom 17 vermischt, in einen Auslasskanal 37 geführt und über eine dritte Gehäuseöffnung 38 ausgestoßen. Die dritte Gehäuseöffnung 38 kann beispielsweise an einer dem Grundrahmen 30 gegenüberliegenden Oberseite der Gehäuseverkleidung 28 angeordnet sein. Der Auslasskanal 37 kann dabei eine Vorzugsrichtung aufweisen, die parallel zur Antriebswelle 13 der Motoreinheit 11 ausgerichtet ist. Der erste Einlasskanal 42, der zweite Einlasskanal 43 sowie der Auslasskanal 37 sind vorzugsweise mit schallabsorbierenden Materialien ausgekleidet und geometrisch so gestaltet, dass sie eine hohe akustische Dämpfung bewirken und den Austritt von Geräuschen aus dem Inneren der Kompressoranlage in die Umgebung möglichst gering halten. Die erforderliche Druckdifferenz für Förderung des ersten Luftstroms 17 sowie des zweiten Luftstroms 18 wird durch den Lüfter 14, jeweils durch den inneren Lüfterabschnitt 15 bzw. den äußeren Lüfterabschnitt 16 aufgebaut.

Der Wärmetauscher 25 ist bei der vorstehend beschriebenen und bevorzugten Anordnung im Wesentlichen über dem Lüfter 14 angeordnet.

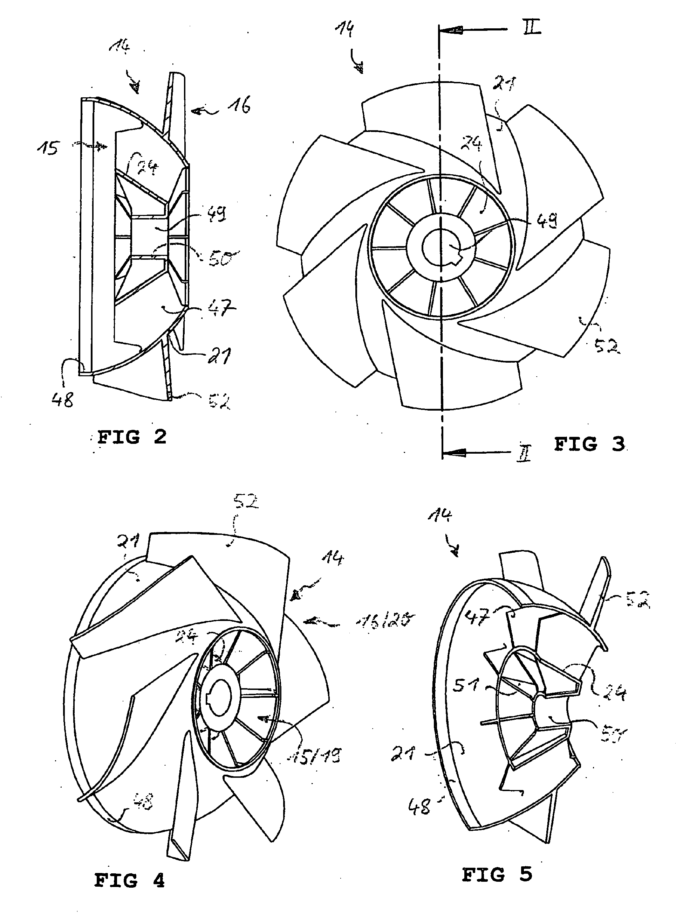

In den Figuren 2 bis 5 ist eine Ausführungsform des erfindungsgemäßen Lüfters dargestellt. In der in Figur 2 gezeigten Schnittansicht lässt sich die Aufteilung des Lüfters in den inneren Lüfterabschnitt 15 sowie den äußeren Lüfterabschnitt 16 deutlich erkennen. Die den Lüfter passierenden Luftströme 17, 18 sind voneinander durch eine Trennfläche 21 getrennt, die als rotationssymmetrische Fläche ausgebildet ist und sich von der Zustromseite zur Abstromseite hin mit insbesondere stetig abnehmender Steigung erweitert. Konzentrisch zur rotationssymmetrischen Trennfläche 21 ist eine Konusfläche 24 im Lüfter vorgesehen, wobei der erste Luftstrom 17 zwischen der Außenseite der Konusfläche 24 und der Innenseite der Trennfläche 21 geführt wird. Auch die Außenseite der Konusfläche ist so ausgerichtet, dass sich der Durchmesser von der Zuströmseite zur Austrittsseite hin vergrößert. Zwischen der Konusfläche 24 und der Trennfläche 21 erstrecken sich eine Mehrzahl erster Lüfterblätter 47 (hier konkret neun Lüfterblätter), die als Radiallüfter wirken, jedoch durch die Formung der Trennfläche 21 und eines einstückig angeformten Austrittsabschnitts 48 den ersten Luftstrom 17 in einer zur Achse des Lüfters 14 im Wesentlichen parallelen Richtung austreten lässt.

Der Lüfter 14 weist zu seiner Befestigung auf der Antriebswelle 14 eine axiale Ausnehmung 49 auf, die als Ausnehmung in einem ansonsten massiven Konus vorgesehen sein kann. Bevorzugt wird allerdings eine axiale Ausnehmung 49, die durch einen im Wesentlichen zylindrischen Grundkörper 50 gebildet wird, der über eine Mehrzahl von Rippen 51 mit der einen Konus ausbildenden Konusfläche 24 verbunden ist.

Zur Ausbildung des äußeren Lüfterabschnitts 16, der bevorzugtermaßen als Axiallüfter wirkt, sind zweite Lüfterblätter 52 an der Außenseite der Trennfläche 21 (hier konkret sechs Lüfterblätter) vorgesehen.

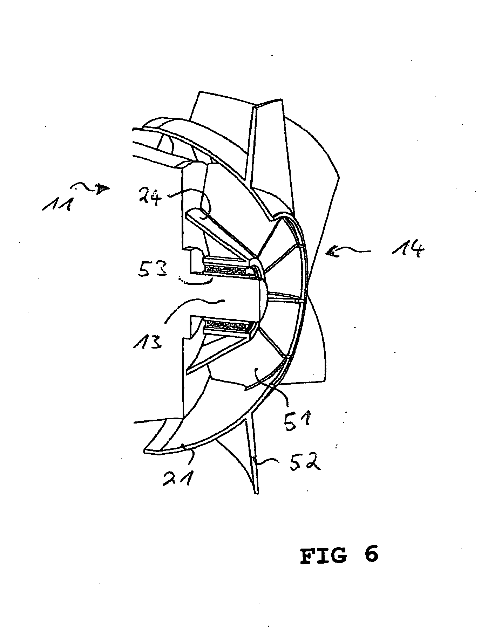

In Fig. 6 ist eine perspektivische Schnittansicht des auf der Antriebswelle 13 montierten Lüfters 14 dargestellt. Zur Vermeindung von Drehmomentstö-βen, die von der Antriebswelle 13 auf den Lüfter 14 übertragen werden könnten, ist auf der Antriebswelle 13 ein Drehschwingungsdämpfer 53 in Form einer Metall-Gummi-Hülse angeordnet, auf der der Lüfter 14 sitzt.

Der erfindungsgemäße Lüfter lässt sich als Kunststoff-Spritzgussteil ausführen und ist als solcher kostengünstiger im Vergleich zur Summe der Einzelkosten eines herkömmlichen Motorlüfters, einer herkömmlichen Motorlüfterhaube sowie eines herkömmlichen Anlagenlüfters.

Die Abmessungen der Kompressoranlage können gegenüber bekannten Lösungen bei ansonsten gleichen Anforderungen an die Kühlluftmengen, die Kühlluftdifferenzdrücke und die akustischen Einfügungsdämpfungen der Kühlluftkanäle verkleinert werden. Gegenüber der in Figur 7 dargestellten Lösung ist dies beispielsweise dadurch möglich, dass der vertikale Abluftkanal 37' entfällt und durch den "kürzer bauenden" Abluftkanal 37, der insbesondere parallel zur Antriebswelle 13 der Motoreinheit 11 ausgerichtet ist, ersetzt wird. Da der Lüfter 14 auf der B-Seite der Motoreinheit installiert ist und in Richtung auf das Motorgehäuse 12 fördert, steht in der Kompressoranlage ohne zusätzliche Vergrößerung der Bauabmessungen genügend Raum für eine Umlenkung der Anlagenkühlluft zum Auslasskanal 37 zur Verfügung. Da der äußere Lüfterabschnitt 16 auf seiner Einströmseite ohne starke Richtwirkung ansaugt, lässt sich der zweite Luftstrom 18 (die Anlagenkühlluft) über einen relativ schmalen, (d.h. in Richtung der Antriebswelle kurzen) aber breiten zweiten Einlasskanal 43 bei akzeptablen Druckverlusten führen.

Im Gegensatz zu dem Anlagenlüfter 39' in Figur 7 fördert der äußere Lüfterabschnitt 16 nur den Kühlluftstrom durch den Wärmetauscher 25 und nicht zusätzlich einen Motorkühlluftstrom, wie bei der herkömmlichen Anordnung nach Figur 7. Dadurch kann der äußere Lüfterabschnitt 16 kleiner dimensioniert werden, was u.a. eine Reduzierung der Geräuschemission durch den Lüfter 14 bewirkt.

Bezugszeichenliste
- 11, 11': Motoreinheit
- 12, 12': Motorgehäuse
- 13, 13': Antriebswelle
- 14: Lüfter
- 15: innerer Lüfterabschnitt
- 16: äußerer Lüfterabschnitt
- 17: erster Luftstrom
- 18: zweiter Luftstrom
- 19: Radiallüfter
- 20: Axiallüfter
- 21: Trennfläche
- 22: zustromseitige Kanaltrennung
- 23: abstromseitige Kanaltrennung
- 24: Konusfläche
- 25, 25': Wärmetauscher
- 26: (rotationssymmetrischer) Tubus
- 27, 27': Verdichterelement
- 28, 28': Gehäuseverkleidung
- 30, 30': Grundrahmen
- 31, 31': Riemenscheibe (motorseitig)
- 32, 32': Riemen
- 33, 33': Riemenscheibe (kompressorseitig)
- 34, 34': Welle (Kompressor)
- 35, 35': (erste) Gehäuseöffnung
- 36, 36': (zweite) Gehäuseöffnung
- 37, 37': Auslasskanal
- 38, 38': (dritte) Gehäuseöffnung
- 39': Anlagenlüfter
- 40': Motorlüftereinheit
- 41: Motorlüfterhaube
- 42, 42': (erster) Einlasskanal

- 43, 43': (zweiter) Einlasskanal
- 45: Stirnseite (Motor)
- 46: Kühlrippen
- 47: (erste) Lüfterblätter
- 48: Austrittsabschnitt
- 49: axiale Ausnehmung
- 50: zylindrischer Grundkörper
- 51: Rippen
- 52: (zweite) Lüfterblätter
- 53: Drehschwingungsdämpfer

## Patentansprüche

1. Kompressoranlage zur Bereitstellung eines komprimierten Gasfluids
- umfassend einen Wärmetauscher (25) zur direkten oder indirekten Kühlung des Gasfluids
- einen luftgekühlten Elektromotor, welcher eine Motoreinheit (11) mit einem Motorgehäuse (11), aus dem eine Antriebswelle (13) hinausragt, umfasst
- wobei durch die Antriebswelle (13) ein Lüfter (14) angetrieben wird,
- wobei der Lüfter (14) mindestens radial und/oder axial getrennte erste und zweite Lüfterabschnitte (15, 16) zur Förderung eines ersten Luftstroms (17) sowie
- eines weiteren, vom ersten Luftstrom (17) getrennten zweiten Luftstroms (18) umfasst
- ferner umfassend eine zustromseitige Kanaltrennung (22), die einen ersten Einlasskanal (42) für den ersten Luftstrom (17) von einem zweiten Einlasskanal (43) für den zweiten Luftstrom (18) trennt, wobei der erste Luftstrom (17) von dem ersten Lüfterabschnitt (15) angesaugt und der zweite Luftstrom (18) mittels des zweiten Lüfterabschnitts (16) gefördert wird,
- wobei die Luftströme (17, 18) über räumlich getrennte Querschnitte in die jeweils zugeordneten Lüfterabschnitte (15, 16) eintreten und
- aus diesen auch ohne Vermischung bzw. ohne wesentliche Vermischung wieder austreten
- und wobei der zweite Luftstrom (18) über den Wärmetauscher (25) geführt und der Wärmetauscher (25) bezogen auf den zweiten Luftstrom (18) stromauf des Lüfters (14) angeordnet ist und
- schließlich umfassend einen Kompressor (27), der durch die Motoreinheit (11) des Elektromotors angetrieben wird.

2. Kompressoranlage nach Anspruch 1,
**dadurch gekennzeichnet,**
**dass** der erste Luftstrom (17) dem Lüfterabschnitt (15) über die zustromseitige Kanaltrennung (22) im Wesentlichen ohne Vorwärmung aus der Umgebung der Kompressoranlage zugeführt wird.

3. Kompressoranlage nach Anspruch 1 oder 2,
**dadurch gekennzeichnet,**
**dass** der zweite Luftstrom (18) dem Lüfterabschnitt (16) über den stromauf angeordneten Wärmetauscher (25) zugeführt wird.

4. Kompressoranlage nach einem der Ansprüche 1 bis 3
**dadurch gekennzeichnet,**
**dass** die Luftströme (17, 18) auch auf der Abstromseite des Lüfters (14) getrennt geführt sind.

5. Kompressoranlage nach einem der Ansprüche 1 bis 4,
**dadurch gekennzeichnet,**
**dass** die Luftströme (17, 18) abstromseitig nach Verlassen des Lüfters (14) im Wesentlichen parallel, insbesondere in gleicher Richtung, geführt sind.

6. Kompressoranlage nach Anspruch 5,
**dadurch gekennzeichnet,**
**dass** die Luftströme (17, 18) abstromseitig des Lüfters (14) im Wesentlichen parallel zur Antriebswelle (13) geführt sind.

7. Kompressoranlage nach einem der Ansprüche 1 bis 6,
**dadurch gekennzeichnet,**
**dass** der erste Luftstrom (17) so geführt wird, dass er die Außenseite des Motorgehäuses (12) kühlt.

8. Kompressoranlage nach einem der Ansprüche 1 bis 7,
**dadurch gekennzeichnet,**
**dass** der innere Lüfterabschnitt (15) als Radiallüfter (19) und der äußere Lüfterabschnitt (16) als Axiallüfter (20) ausgebildet ist.

9. Kompressoranlage nach einem der Ansprüche 1 bis 8,
**dadurch gekennzeichnet,**
**dass** der Lüfter (14) eine vorzugsweise rotationssymmetrisch ausgebildete Trennfläche (21) umfasst, die insbesondere als Rotationsfläche ausgebildet ist, und eine Trennung der Luftströme (17, 18) innerhalb des Lüfters (14) bewirkt.

10. Kompressoranlage nach einem der Ansprüche 1 bis 9,
**dadurch gekennzeichnet,**
**dass** eine abstromseitige Kanaltrennung im Wesentlichen als Zylindermantel ausgebildet ist, der insbesondere das Motorgehäuse (12) zumindest teilweise umschließt.

11. Kompressoranlage nach einem der Ansprüche 1 bis 10,
**dadurch gekennzeichnet,**
**dass** die Trennfläche (21) des Lüfters (14) auf die Radien der zustromseitigen Kanaltrennung (22) und/oder der abstromseitigen Kanaltrennung (23) abgestimmt ist, so dass die Luftströme (17, 18) mit ausreichender Abtrennung voneinander getrennt geführt sind.

12. Kompressoranlage nach einem der Ansprüche 1 bis 11,
**dadurch gekennzeichnet,**
**dass** der Lüfter (14) an seinem Außenumfang mit einem rotationssymmetrischen, insbesondere feststehenden oder mit dem Lüfter mitrotierenden Tubus (26) zusammenwirkt, der die Wirbelbildung verringert.

13. Kompressoranlage nach einem der Ansprüche 1 bis 12,
**dadurch gekennzeichnet,**
**dass** die Antriebswelle (13) einstückig oder mehrteilig ausgebildet ist und aus dem Motorgehäuse (12) an zwei gegenüberliegenden Seiten hinausragt, wobei eine Seite als Abtriebswelle zum Anschluss eines Getriebes oder einer Arbeitsmaschine ausgebildet ist und an der gegenüberliegenden Seite der Antriebswelle (13) der Lüfter (14) angeordnet ist.

14. Kompressoranlage nach einem der Ansprüche 1 bis 13,
**dadurch gekennzeichnet,**
**dass** der innere Lüfterabschnitt (15) eine Konusfläche (24) bzw. einen Konus umfasst und dass der erste Luftstrom (17) zwischen der Konusfläche (24) und der Trennfläche (21) geführt ist.

15. Kompressoranlage nach einem der Ansprüche 1 bis 14,
**dadurch gekennzeichnet,**
**dass** der Lüfter (14) unter Zwischenschaltung eines Drehschwingungsdämpfers (53) an die Antriebswelle (13) angeschlossen ist.

16. Kompressoranlage nach einem der Ansprüche 1 bis 15,
**dadurch gekennzeichnet,**
**dass** der Lüfter (14) als Kunststoff-Spritzgussteil oder als Aluminium-Druckgussteil oder als Aluminium-Kokillengussteil ausgebildet ist.

17. Kompressoranlage nach einem der Ansprüche 1 oder 16,
**dadurch gekennzeichnet,**
**dass** der Wärmetauscher (25) in einer äußeren Gehäuseverkleidung (28) integriert ist, derart, dass der Wärmetauscher (25) an einer Zustromseite des zugeordneten Luftstromes (18) von außen sichtbar bleibt.

18. Kompressoranlage nach einem der Ansprüche 1 bis 17,
**dadurch gekennzeichnet,**
**dass** eine zustromseitige Kanaltrennung (22) als zylindrisches Rohrstück ausgebildet ist, wobei der erste Luftstrom (17) durch das Innere des Rohrstücks angesaugt wird.

19. Kompressoranlage nach einem der Ansprüche 1 bis 18,
**dadurch gekennzeichnet,**
**dass** Kanäle, insbesondere mindestens ein erster Einlasskanal (42), vorzugsweise ein zweiter oder mindestens ein weiterer Einlasskanal (43) sowie ein Auslasskanal (37) vorgesehen sind, um das Gasfluid in die mit einer schallisolierenden Gehäuseverkleidung umgebene Kompressoranlage einzuführen bzw. auszuführen,
wobei die Kanäle mit Schalldämpfungsmitteln, insbesondere mit wandseitigen Schalldämpfungsbelägen ausgestattet sind, um eine Schallemission aus der Kompressoranlage heraus zu dämpfen.

## Claims

1. A compressor assembly for supplying a compressed gas fluid
- comprising a heat exchanger (25) for directly or indirectly cooling the gas fluid,
- an air-cooled electric motor which comprises a motor unit (11) having a motor housing (11) from which a drive shaft (13) protrudes to the outside,
- wherein a ventilator (14) is driven by the drive shaft (13),
- wherein the ventilator (14) comprises at least radially and/or axially separated first and second ventilator sections (15, 16) for conveying a first air stream (17) as well as
- a further second air stream (18) separate from the first air stream (17),
- further comprising an inflow-side channel separation (22) separating a first inlet channel (42) for the first air stream (17) from a second inlet channel (43) for the second air stream (18), wherein the first air stream (17) is sucked in by the first ventilator section (15) and the second air stream (18) is conveyed by means of the second ventilator section (16),
- wherein the air streams (17, 18) enter the respectively associated ventilator sections (15, 16) via spatially separated cross-sections, and
- exit again from same without intermixing, respectively without essentially intermixing,
- and wherein the second air stream (18) is conducted via the heat exchanger (25), and the heat exchanger (25) is arranged upstream of the ventilator (14) relative the second air stream (18), and
- lastly comprising a compressor (27) which is driven by the motor unit (11) of the electric motor.

2. The compressor assembly according to claim 1,
**characterized in that**
the first air stream (17) is supplied to the ventilator section (15) from the compressor assembly's environment via the inflow-side channel separation (22) essentially without preheating.

3. The compressor assembly according to claim 1 or 2,
**characterized in that**
the second air stream (18) is supplied to the ventilator section (16) via the heat exchanger (25) arranged upstream.

4. The compressor assembly according to any one of claims 1 to 3, **characterized in that**
the air streams (17, 18) are also conducted separately at the outflow side of the ventilator (14).

5. The compressor assembly according to any one of claims 1 to 4, **characterized in that**
the air streams (17, 18) are conducted on the outflow side essentially parallel, e.g. in the same direction, after leaving the ventilator (14).

6. The compressor assembly according to claim 5,
**characterized in that**
the air streams (17, 18) are conducted essentially parallel to the drive shaft (13) on the outflow side of the ventilator (14).

7. The compressor assembly according to any one of claims 1 to 6,
**characterized in that**
the first air stream (17) is conducted such that it cools the outer surface of the motor housing (12).

8. The compressor assembly according to any one of claims 1 to 7,
**characterized in that**
the inner ventilator section (15) is formed as a radial ventilator (19) and the outer ventilator section (16) as an axial ventilator (20).

9. The compressor assembly according to any one of claims 1 to 8,
**characterized in that**
the ventilator (14) comprises a separating surface (21) of a preferably rotation-symmetrical configuration which is e.g. configured as a rotation surface and causes the air streams (17, 18) within the ventilator (14) to separate.

10. The compressor assembly according to any one of claims 1 to 9,
**characterized in that**
an outflow-side channel separation is essentially configured as a cylindrical jacket which at least partially encloses e.g. the motor housing (12).

11. The compressor assembly according to any one of claims 1 to 10,
**characterized in that**
the ventilator's (14) separating surface (21) is adapted to the radii of the inflow-side channel separation (22) and/or the outflow-side channel separation (23) so that the air streams (17, 18) are conducted at a sufficient separation from each other.

12. The compressor assembly according to any one of claims 1 to 11,
**characterized in that**
the outer circumference of the ventilator (14) cooperates with a tube (26) which is rotation-symmetrical, e.g. immobile or co-rotating with the ventilator, which reduces vortex formation.

13. The compressor assembly according to any one of claims 1 to 12,
**characterized in that**
the drive shaft (13) is configured to be one-piece or multi-piece and protrudes from the motor housing (12) at two opposite sides, wherein one side of the drive shaft is configured for connecting a gear or a working machine and the ventilator (14) is arranged on the opposite side of the drive shaft (13).

14. The compressor assembly according to any one of claims 1 to 13,
**characterized in that**
the inner ventilator section (15) comprises a conical surface (24), respectively a cone, and that the first air stream (17) is conducted between the conical surface (24) and the separating surface (21).

15. The compressor assembly according to any one of claims 1 to 14,
**characterized in that**
the ventilator (14) is connected to the drive shaft (13) with an interposed torsional vibration damper (53).

16. The compressor assembly according to any one of claims 1 to 15,
**characterized in that**
the ventilator (14) is configured as a plastic injection-molded part or as an aluminum die-cast part or as an aluminum chill-cast part.

17. The compressor assembly according to any one of claims 1 to 16,
**characterized in that**
the heat exchanger (25) is integrated into an outer housing cover (28) such that the heat exchanger (25) remains visible from outside at an inflow side of the associated air stream (18).

18. The compressor assembly according to any one of claims 1 to 17,
**characterized in that**
an inflow-side channel separation (22) is configured as a cylindrical pipe section, wherein the first air stream (17) is sucked in through the interior of the pipe section.

19. The compressor assembly according to any one of claims 1 to 18,
**characterized in that**
the channels, e.g. at least a first inlet channel (42), preferably a second or at least a further inlet channel (43) as well as an outlet channel (37) are provided in order to introduce or discharge the gas fluid into or from the compressor assembly enclosed in a noise attenuating housing cover,
wherein the channels are equipped with noise attenuating means, e.g. wall side noise attenuating covers, in order to attenuate noise emission from the compressor assembly.

## Revendications

1. Installation de compresseur pour la mise à disposition d'un fluide gazeux comprimé
- comprenant un échangeur de chaleur (25) pour le refroidissement direct ou indirect du fluide gazeux,
- un moteur électrique refroidi par air qui comprend une unité moteur (11) avec un carter de moteur (11) d'où dépasse un arbre d'entraînement (13),
- un ventilateur (14) étant entraîné par l'arbre d'entraînement (13),
- le ventilateur (14) comprenant au moins des première et deuxième portions de ventilateur (15, 16) séparées radialement et/ou axialement pour le refoulement d'un premier flux d'air (17) ainsi que
- d'un autre, deuxième flux d'air (18) séparé du premier flux d'air (17),
- comprenant en outre une séparation de conduit (22) côté admission, qui sépare un premier conduit d'entrée (42) pour le premier flux d'air (17) d'un deuxième conduit d'entrée (43) pour le deuxième flux d'air (18), le premier flux d'air (17) étant aspiré par la première portion de ventilateur (15) et le deuxième flux d'air (18) étant refoulé au moyen de la deuxième portion de ventilateur (16),
- les flux d'air (17, 18) entrant dans les portions de ventilateur respectivement associées (15, 16) via des sections transversales spatialement séparées et
- ressortant également de celles-ci sans mélange ou sans mélange notable
- et le deuxième flux d'air (18) étant guidé via l'échangeur de chaleur (25) et l'échangeur de chaleur (25) étant disposé en amont du ventilateur (14) par rapport au deuxième flux d'air (18) et
- comprenant enfin un compresseur (27) qui est entraîné par l'unité moteur (11) du moteur électrique.

2. Installation de compresseur selon la revendication 1,
**caractérisée en ce que**
le premier flux d'air (17) est amené à la portion de ventilateur (15) via la séparation de conduit côté admission (22) sensiblement sans préchauffage à partir de l'environnement de l'installation de compresseur.

3. Installation de compresseur selon la revendication 1 ou 2,
**caractérisée en ce que**
le deuxième flux d'air (18) est amené à la portion de ventilateur (16) via l'échangeur de chaleur (25) disposé en amont.

4. Installation de compresseur selon l'une des revendications 1 à 3,
**caractérisée en ce que**
les flux d'air (17, 18) sont également guidés séparément côté évacuation du ventilateur (14).

5. Installation de compresseur selon l'une des revendications 1 à 4,
**caractérisée en ce que**
les flux d'air (17, 18) sont guidés de manière sensiblement parallèle, en particulier dans la même direction, côté évacuation après avoir quitté le ventilateur (14).

6. Installation de compresseur selon la revendication 5,
**caractérisée en ce que**
les flux d'air (17, 18) sont guidés de manière sensiblement parallèle à l'arbre d'entraînement (13) côté évacuation du ventilateur (14).

7. Installation de compresseur selon l'une des revendications 1 à 6,
**caractérisée en ce que**
le premier flux d'air (17) est guidé de telle façon qu'il refroidisse le côté extérieur du carter de moteur (12).

8. Installation de compresseur selon l'une des revendications 1 à 7,
**caractérisée en ce que**
la portion de ventilateur intérieure (15) est constituée comme ventilateur radial (19) et la portion de ventilateur extérieure (16) comme ventilateur axial (20).

9. Installation de compresseur selon l'une des revendications 1 à 8,
**caractérisée en ce que**
le ventilateur (14) comprend une face de séparation (21) constituée de préférence de façon symétrique en rotation, qui est constituée en particulier comme face de rotation, et qui provoque une séparation des flux d'air (17, 18) à l'intérieur du ventilateur (14).

10. Installation de compresseur selon l'une des revendications 1 à 9,
**caractérisée en ce que**
une séparation de conduit côté évacuation est constituée sensiblement comme enveloppe cylindrique qui entoure au moins en partie en particulier le carter de moteur (12).

11. Installation de compresseur selon l'une des revendications 1 à 10,
**caractérisée en ce que**
la face de séparation (21) du ventilateur (14) est ajustée aux rayons de la séparation de conduit côté admission (22) et/ou de la séparation de conduit côté évacuation (23) de sorte que les flux d'air (17, 18) soient guidés avec une séparation suffisante l'un par rapport à l'autre.

12. Installation de compresseur selon l'une des revendications 1 à 11,
**caractérisée en ce que**
le ventilateur (14) interagit sur sa périphérie extérieure avec un tube (26) symétrique en rotation, en particulier installé de façon fixe ou tournant avec le ventilateur, qui réduit la formation de tourbillons.

13. Installation de compresseur selon l'une des revendications 1 à 12,
**caractérisée en ce que**
l'arbre d'entraînement (13) est constitué d'une pièce ou de plusieurs parties et dépasse du carter de moteur (12) de deux côtés opposés, un côté étant constitué comme arbre de sortie pour le raccordement d'un adaptateur de vitesse ou d'une machine de travail et le ventilateur (14) étant disposé du côté opposé de l'arbre d'entraînement (13).

14. Installation de compresseur selon l'une des revendications 1 à 13,
**caractérisée en ce que**
la portion de ventilateur intérieure (15) comprend une face conique (24) ou un cône et **en ce que** le premier flux d'air (17) est guidé entre la face conique (24) et la face de séparation (21).

15. Installation de compresseur selon l'une des revendications 1 à 14,
**caractérisée en ce que**
le ventilateur (14) est raccordé à l'arbre d'entraînement (13) moyennant interposition d'un amortisseur de vibrations de rotation (53).

16. Installation de compresseur selon l'une des revendications 1 à 15,
**caractérisée en ce que**
le ventilateur (14) est constitué comme pièce de moulage par injection en matière synthétique ou comme pièce de moulage sous pression en aluminium ou comme pièce de moulage en lingotière en aluminium.

17. Installation de compresseur selon l'une des revendications 1 à 16,
**caractérisée en ce que**
l'échangeur de chaleur (25) est intégré dans un habillage de carter extérieur (28) de telle façon que l'échangeur de chaleur (25) reste visible de l'extérieur d'un côté admission du flux d'air associé (18).

18. Installation de compresseur selon l'une des revendications 1 à 17,
**caractérisée en ce que**
une séparation de conduit côté admission (22) est constituée comme élément tubulaire cylindrique, le premier flux d'air (17) étant aspiré par l'intérieur de l'élément tubulaire.

19. Installation de compresseur selon l'une des revendications 1 à 18,
**caractérisée en ce que**
des conduits, en particulier au moins un premier conduit d'entrée (42), de préférence un deuxième ou au moins un autre canal d'entrée (43) ainsi qu'un canal de sortie (37) sont prévus pour guider le fluide gazeux dans / hors de l'installation de compresseur entourée par un habillage de carter à isolation acoustique,
les conduits étant munis de moyens d'atténuation acoustique, en particulier de garnitures d'atténuation acoustique côté paroi pour atténuer l'émission acoustique provenant de l'installation de compresseur.
